# EUROPEAN PATENT APPLICATION

(11) **EP 2 402 746 A1**
(43) Date of publication of application: **04.01.2012**
(21) Application number: 10290353.1
(22) Date of filing: 30.06.2010
(51) Int. Cl.: G01N 30/16, G01N 30/08

(54) **Injector and method for injecting a sample into a chromatography column**

(71) Applicant: Services Pétroliers Schlumberger, 75007 Paris (FR); Schlumberger Technology B.V., 2514 JG The Hague (NL); Schlumberger Holdings Limited, Road Town, Tortola (VG); PRAD Research and Development Limited, Road Town, Tortola BV1 (VG)
(72) Inventor: Guieze, Paul, Glatigny, 77370 Fontenailles (FR); Hamed, Nejib, Bucksburn, AB231 9LT, Aberdeen (GB); Bouaiss, Abdoune, AB11 6CT, Aberdeen (GB)
(74) Representative: Vandermolen, Mathieu

(57) **Abstract**

An injector (101) for injecting a sample into a chromatography column (161) comprises a sample inlet (105) for feeding the sample into the injector (101), an injection chamber (107) comprises a packing (119) for separating the sample into components thereof, and a first sample outlet (109) intended to be in fluid communication with the chromatography column (161). The injector (101) may be used in a chromatography system (159) for analyzing a sample.

## Description

### FIELD OF THE INVENTION

The invention relates to injectors, in particular to injectors for use in analytical chemical instruments. More particularly, the present invention relates to an injector for use in chromatography, to an injection system comprising the injector, to a chromatography system comprising the injection system, as well as to a method for injecting a sample into a chromatography column.

### BACKGROUND

In analytical chemistry, chromatography is a common tool used to separate and detect different compounds in a sample fluid. In the present description and in the following claims, the term "fluid" indicates either a gas or a liquid or mixtures thereof. A common chromatography system for performing chromatography has a chromatography separation column to separate the sample fluid into the components thereof. The sample fluid is injected into the chromatography column through an injection system. The different components eluted from the chromatography column are detected by one or more detectors and are then discharged to waste. The different components are shown as "peaks" on a chromatogram.

Various techniques have been used to improve the injection systems ability to inject a sample having a desired composition into a chromatography column. A common injection system comprises an injector having a sample inlet provided with a septum, a heated injection chamber and a sample outlet in fluid communication with the chromatography column. A sample is fed to the injection chamber, usually by means of a needle of a micro-syringe through the septum. A carrier fluid then either carries the entire sample or a portion of the sample. When the chromatography system comprises a capillary chromatography column, it is common practice to operate in the split mode, *i.e.* to inject only a portion of the sample into the chromatography column, the remaining portion of the sample being discharged from the injector through a further sample outlet (split vent). Indeed, in case of capillary columns, if the entire sample is injected into the chromatography column, the column may be overloaded and the resolution of the chromatogram peaks may be lost.

Two serial chromatography columns are commonly used, typically a shorter "precolumn" to perform a preliminary separation of the sample components so as to select the components to be analyzed and a longer "analytical column" arranged downstream of the precolumn to perform the analysis of the selected components. In the present disclosure and in the following claims, the terms "upstream" and "downstream" are used with reference to the flow direction of the sample.

For example, European patent application EP-A1-0 247 929 describes a method and apparatus for analysis by gas chromatography of a liquid substance, in particular of crude petroleum oils. The apparatus comprises an injector, a first chromatography column, referred to as a precolumn, an intermediate chamber, such as a flow dividing chamber, a second chromatography column, a device for adding carrier gas and an analysis detector. The injector is intended to vaporize the components of the substance to be analyzed and to inject the same into the precolumn. The vaporized components are submitted to a first separation stage in the precolumn. The effluent of the precolumn is passed through the flow dividing chamber. A second separation stage is performed by passing the effluent of the flow dividing chamber to the second chromatography column. After a predetermined time period, flushing gas is introduced through the flow dividing chamber and flowed through the precolumn in a direction opposite to the original direction of the flow.

PCT patent application WO 96/27792 describes a fixed-volume injector assembly having backflush capability useful for injecting a sample into a gas chromatograph. In the backflush mode, carrier fluid flows through the injector assembly in the opposite direction with respect to the carrier fluid flow in the injection mode. The injector assembly is deigned to connect to the precolumn and the analytical column so that, in the backflush mode, the precolumn is backflushed.

However, the provision of the precolumn in prior art chromatography systems results in a complicated chromatography system including additional elements, such as heating elements and connections, creating additional undesired dead volumes and requiring a further need of maintenance.

### SUMMARY OF INVENTION

An object of the present disclosure is that of simplifying a chromatography system comprising an injector, at least one chromatography column and a detector, while maintaining the desired efficiency and reliability of the chromatography analysis. In this regard, the Applicant has found that the above-mentioned preliminary separation performed in prior art chromatography system may be performed in a new injector, thus eliminating the need for a precolumn arranged upstream of the chromatography column.

According to one aspect of the present disclosure, an injector for injecting a sample into a chromatography column is provided. The injector comprises a sample inlet for feeding the sample into the injector, an injection chamber, a packing housed in the injection chamber for separating the sample into components thereof, and a first sample outlet intended to be in fluid communication with the chromatography column.

Advantageously, the introduction of a packing in the injector allows for, amongst others, a gain of space in a chromatography system for which the injector is intended, an ease of maintenance of this system, and reduced dead volumes, eliminating need for additional connections to a precolumn, as in prior art systems. Further, when a carrier fluid is used to carry the sample through the injector, the packing provided in the injector ensures a good mixing of the sample components with the carrier fluid, thereby providing a uniform concentration of the sample at the chromatography column inlet. Typically the sample is a fluid i.e. gas, liquid or mixtures thereof. The composition of the fluid may vary widely. Exemplary samples that can be analyzed using the present invention are liquid or gas samples obtained from oilfield operations.

In a preferred embodiment, the sample inlet is intended for feeding a sample in the injection chamber. In a preferred embodiment, the sample inlet is intended for feeding a sample in an initial injection point within the injection chamber, preferably through a needle of a syringe, of a valve or of any other device suitable for the purpose. In a preferred embodiment, said device comprises a fluid sampling valve or a high pressure injection device equipped with a needle. The sample inlet is preferably provided with a septum through which the needle may be inserted. The septum may be for example a membrane of resilient material capable of being pierced by a needle.

According to a preferred embodiment, the injection chamber is provided in the body of the injector, which is preferably a hollow, preferably cylindrical, body.

According to a preferred embodiment, the injection chamber is an insert housed in the body of the injector. The insert is preferably arranged longitudinally within the body of the injector. Preferably, the insert is made of stainless steel or glass. Preferably, the insert is cylindrical.

In a preferred embodiment, the packing comprises an inert support material which is coated with, or has adsorbed onto it, a liquid or solid stationary phase. The inert support material is preferably finely divided. By way of illustrative example, the support material may comprise diatomaceous earth. The nature of the stationary phase determines what type of components will be most strongly adsorbed. The packing is preferably used for preventing predetermined components from being injected into the chromatography column. To this purpose, the support material and stationary phase may either delay the elution of said predetermined components for a predetermined period of time or adsorb said predetermined components. Advantageously, when injecting a sample which would not be totally eluted through a chromatography column for various reasons, such as too high boiling point, stationary phase poisoning, or out of analysis interest, the packing enables avoiding any pollution of the chromatography column. In a preferred embodiment, the packing is intended to separate the lighter components of the fluid to be analyzed from the heavier portion which is not intended for analysis purposes. Alternatively, the packing is intended to separate the heavier components of the fluid to be analyzed from the lighter portion which is not intended for analysis purposes.

In a preferred embodiment, the injector further comprises a connector intended to put the injector in fluid communication with the chromatography column, the connector being preferably at least partially housed in the first sample outlet. Preferably, the connector is arranged at least partially in the injection chamber, preferably downstream of the packing. Advantageously, the connector ensures a correct spot injection of the sample into the chromatography column after the sample eluted from the packing, while avoiding any perturbation of the column inlet flow.

Preferably, the injector further comprises a first fluid inlet for feeding a carrier fluid into the injector so as to carry the sample through the whole injection chamber to the first sample outlet. In a preferred embodiment, the carrier fluid carries the sample from the initial injection point within the injection chamber, through the whole injection chamber, to the first sample outlet.

The carrier fluid is preferably chemically inert with respect to the sample to be analyzed. In a preferred embodiment, the carrier fluid is a gas. When the carrier fluid is a gas, the chromatography is a gas chromatography. Preferred gases include nitrogen, helium, argon and carbon dioxide and mixtures thereof. The choice of the carrier fluid is dependent upon the sample to be analyzed and the type of detector which is used in the chromatography system for which use of the injector is intended.

Preferable, the injector further comprises a second fluid inlet for feeding a cleaning fluid into the injector so as to clean the injection chamber from possible remaining components of the sample. Preferably, the injector further comprises a fluid outlet for discharging the cleaning fluid from the injector. Advantageously, in this way it is possible to remove the components of the sample possibly remaining in the injector from the injector, thereby avoiding unreliable results due to the pollution of the chromatography column by components unwanted for analysis. For example, in the case of the injection of wide boiling range samples where the high boiling point components might exceed the normal elution capability of the chromatography column, the heavier components, if not removed from the injector, may pollute the column at each injection as well as between injections, resulting in bad quality analysis.

The cleaning fluid is preferably chemically inert with respect to the sample to be analyzed. In a preferred embodiment, the cleaning fluid is a gas. Preferred gases include nitrogen, helium, argon and carbon dioxide and mixtures thereof. Preferably, the cleaning fluid is the same as the carrier fluid. In this way, a single fluid supply may be envisaged for the carrier fluid and the cleaning fluid. Alternatively, the cleaning fluid is different from the carrier fluid.

According to a preferred embodiment, the injector further comprises a second sample outlet for discharging a predetermined amount of the sample from the injector. In this way, it is advantageously possible to split the sample flow eluted from the packing into two portions, namely a first portion intended for analysis, which is intended to be injected into the chromatography column, and a second portion which is not intended for analysis, which is discharged from the injector through the second sample outlet. Advantageously, this preferred embodiment is particularly useful when the injector is used in combination with a capillary chromatography column so as to avoid any overloading of the column and to maintain the quality and efficiency of the chromatography analysis.

In a preferred embodiment, the injector further comprises a heater for heating the injector, preferably the injection chamber, to a predetermined temperature. In this way, it is advantageously possible to set the temperature in the injector to a predetermined temperature, preferably such that either the liquid samples are vaporized in whole or partially, or the gas samples are maintained in the gas phase in the whole injector. The heater can be also advantageously used to heat the carrier fluid in the injector to a desired predetermined temperature. In a preferred embodiment, the heater is arranged so as to heat at least the section of the injector including the initial injection point. In a preferred embodiment, the heater is arranged around the body of the injector. In a preferred embodiment, the heater is integrated into the injector, preferably in the walls of the body of the injector. In a preferred embodiment, the heater is arranged around a predetermined section of the body of the injector. According to a preferred embodiment, the injector comprises a heater for heating a section of the injection chamber, preferably upstream of the packing. According to a further preferred embodiment, the heater is arranged around a section of the injection chamber, preferably upstream of the packing.

According to another aspect of the present disclosure, an injection system for injecting a sample into a chromatography column is provided. The injection system comprises the injector as defined above and at least one fluid supply, preferably a pressure fluid supply, which is in fluid communication with the first fluid inlet, for example via a supply line, preferably a pressure supply line or conduit. When the fluid supply is a pressure fluid supply, for example a pressure container, the injection system preferably further comprises means for pressurizing the fluid supply.

In a preferred embodiment, the injection system further comprises at least one further fluid supply, preferably a pressure fluid supply, which is in fluid communication with the second fluid inlet, for example via a further supply line to transport the cleaning fluid (cleaning fluid supply line), preferably a further pressure supply line or conduit. When the further fluid supply is a pressure fluid supply, for example a pressure container, the injection system preferably further comprises means for pressurizing the further fluid supply.

Alternatively, the first fluid inlet and the second fluid inlet may be connected to a single fluid supply, preferably a pressure fluid supply, for example a pressure container. Advantageously, the use of a single fluid supply allows for a single fluid to be used as a carrier fluid and as a cleaning fluid. Preferably, the injection system further comprises a valve for switching between the first fluid inlet and the second fluid inlet. The valve may be any type of valve known to the man skilled in the art, and preferably a solenoid valve.

According to a preferred embodiment, the second sample outlet is connected to at least one first vent exit, for example via a split line or conduit. According to a preferred embodiment, the fluid outlet is connected to at least one second vent exit, for example via a second fluid outlet line to discharge the cleaning fluid from the injector (cleaning fluid outlet line). The vent exit(s) are connected to the atmosphere or to any waste disposal or recycling device. Alternatively, the second sample outlet and the fluid outlet are connected to a single vent exit. Preferably, the injection system further comprises a valve for switching between the second sample outlet and the fluid outlet. The valve may be any type of valve known to the man skilled in the art, and preferably a solenoid valve.

In a preferred embodiment, the injection system further comprises a means to control the carrier fluid pressure, for example a device intended to control the pressure of the carrier fluid or pressure controller. This control enables a pressure control at the inlet of the chromatography column and may be used to ensure a predetermined flow rate in the chromatography column, preferably a substantially constant flow rate, corresponding to a substantially constant differential pressure at the column ends.

In a preferred embodiment, the injection system further comprises a means to control the flow rate of the sample discharged from the injector through the second sample outlet, for example a device intended to control the flow rate of the sample discharged through the second sample outlet or flow rate controller, for example a valve. This control may be used to ensure a predetermined ratio between the flow rate of the sample portion injected into the chromatography column and the flow rate of the sample portion discharged through the second sample outlet (split ratio) during the injection process. Preferably, the control of the flow rate of the sample discharged through the second sample outlet is used to maintain a substantially constant split ratio.

In a preferred embodiment, the injection system comprises both a means to control the carrier fluid pressure and a means to control the flow rate of the sample discharged from the injector through the second sample outlet. Advantageously, the control of the carrier fluid pressure and the control of the flow rate of the sample discharged through the second sample outlet may be used independently to compensate any component quantitative discrimination of the sample in low boiling sample components and high boiling sample components in the injector due to the different vaporization rate of the components in the injection chamber, and to inject into the chromatography column a sample which is representative of the sample fed into the injector. It is in particular advantageously possible to control the split ratio of the sample at the chromatography column head when a pressure change in the injection chamber occurs due, for example, to vaporization of the sample, so as to inject into the chromatography column a sample which is representative of the sample fed into the injector. In a preferred embodiment, the injection system comprises a means to control the carrier fluid pressure, flow rate and temperature and a means to control the flow rate, pressure and temperature of the sample discharged from the injector through the second sample outlet.

According to a preferred embodiment of the present disclosure, the injection system further comprises at least one trap for collecting any condensable components, the trap being arranged upstream the flow rate control device. Advantageously, the use of traps allows avoiding the condensation of the components in the flow rate control device, thereby avoiding any pollution of the flow rate control device.

According to a preferred embodiment, the injection system comprises a trap for collecting any condensable components in the split line, the trap being arranged upstream the flow rate control device. According to a preferred embodiment, the injection system comprises a trap for collecting any condensable components in the cleaning fluid outlet line. The above mentioned traps also allow collecting any hydrocarbons contained in the carrier or cleaning fluids to prevent said hydrocarbons from being released into the atmosphere. The traps may contain for example activated carbon material.

According to another aspect of the present disclosure, a chromatography system for analyzing a sample is provided. The chromatography system comprises the injection system as defined above, a chromatography column in fluid communication with the injector, and a detector connected to the chromatography column for detecting the components of said sample.

According to a further aspect of the present disclosure, a method for injecting a sample into a chromatography column is provided. The method comprises feeding the sample to an injector comprising an injection chamber, separating predetermined components of the sample in the injection chamber, and injecting the predetermined components so separated into the chromatography column. Preferably, injecting the predetermined components into the chromatography column is performed at a predetermined flow rate.

Preferably, the method further comprises feeding a carrier fluid into the injector so as to carry the sample through the injection chamber.

In a preferred embodiment, the method further comprises removing the components of the sample remaining in the injector from the injector. Advantageously, the removing allows avoiding unreliable results due to the pollution of the chromatography column by components unwanted for analysis. Preferably, removing is performed by feeding a cleaning fluid into the injector.

According to a preferred embodiment, the method further comprises interrupting feeding the carrier fluid, feeding a cleaning fluid into the injector so as to clean the injection chamber, and discharging the cleaning fluid from the injector.

According to a preferred embodiment, the method further comprises splitting the predetermined components so separated into a first portion intended to be injected into the chromatography column, and a second portion intended to be discharged from the injector.

According to a preferred embodiment, the method further comprises the method further comprises maintaining a predetermined ratio between the flow rate of the first portion and the flow rate of the second portion.

In a preferred embodiment, injecting the predetermined components so separated into the chromatography column is performed at a predetermined, preferably substantially constant, flow rate of the components. According to a preferred embodiment, the method further comprises controlling the pressure of the carrier fluid, thereby controlling the flow rate of the predetermined components of the sample injected into the chromatography column. Advantageously, the control of the flow rate of the predetermined components injected into the chromatography column enables maintaining the desired efficiency and reliability of the chromatography analysis.

In a preferred embodiment, the sample flow eluted from the packing is split into two portions, a first portion intended for analysis, which is therefore injected into the chromatography column, and a second portion which is not intended for analysis. Preferably, the method further comprises discharging the second portion from the injector, preferably through the second sample outlet. In a preferred embodiment, discharging the second portion is performed at a controlled flow rate. In a preferred embodiment, the method further comprises controlling the flow rate of the second portion. Advantageously, the control of the flow rate of the second portion enables controlling the split ratio. Preferably, the split ratio is substantially constant.

Other aspects and advantages of the disclosure will be apparent from the following detailed description and the appended claims.

### BRIEF DESCRIPTION OF DRAWINGS

Implementations of the invention may be better understood when consideration is given to the following detailed description thereof. Such description makes reference to the annexed pictorial illustrations, schematics, graphs, drawings, and appendices. In the drawings:

Figure 1 is a schematic illustration of the injector according to an embodiment of the present disclosure.

Figure 2 is a schematic illustration of an injection system according to an embodiment of the present disclosure.

Figure 3 is a schematic illustration of an injection system according to an embodiment of the present disclosure.

Figure 4 is a schematic diagram of a chromatography system according to an embodiment of the present disclosure.

### DETAILED DESCRIPTION OF THE INVENTION

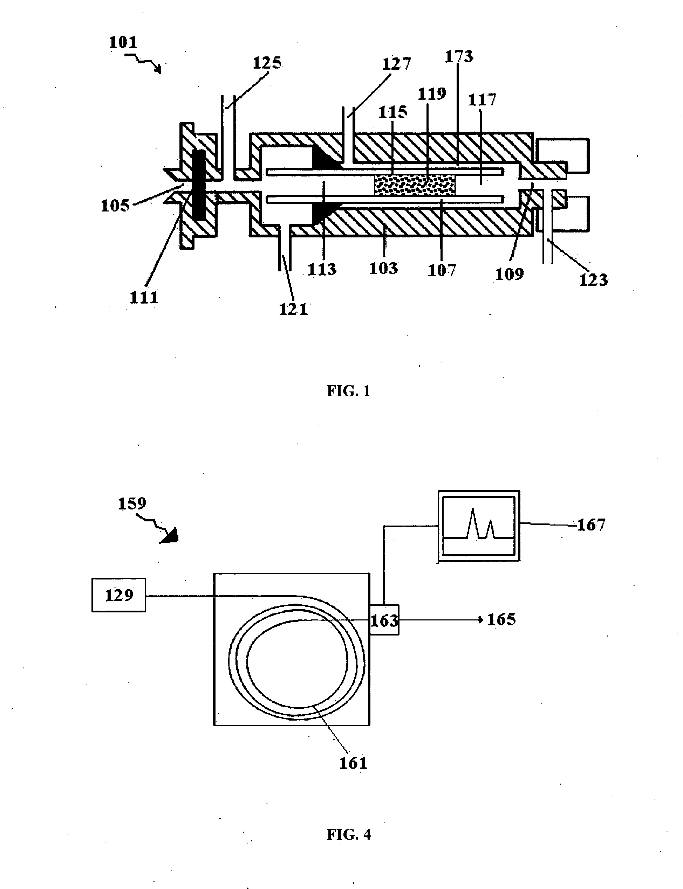

Referring to Figure 1, an injector 101 according to an embodiment of the present disclosure for injecting a sample, for example a liquid, into a chromatography column is shown. The injector 101 comprises a sample inlet 105 for feeding a sample into the injector 101, an injection chamber 107, a packing 119 for separating the sample into components thereof, the packing 119 being housed in the injection chamber 107, and a first sample outlet 109 which is intended to be put in fluid communication with a chromatography column (not shown).

The injection chamber 107 is an insert disposed longitudinally in the body 103 of the injector 101. The injection chamber is preferably of a cylindrical shape. Between the insert and the inner walls of the injector body, a channel 173 is defined. With respect to the sample flow direction, the injection chamber 107 includes a section 113, a section 115 and a section 117, the packing 119 being housed in the section 115.

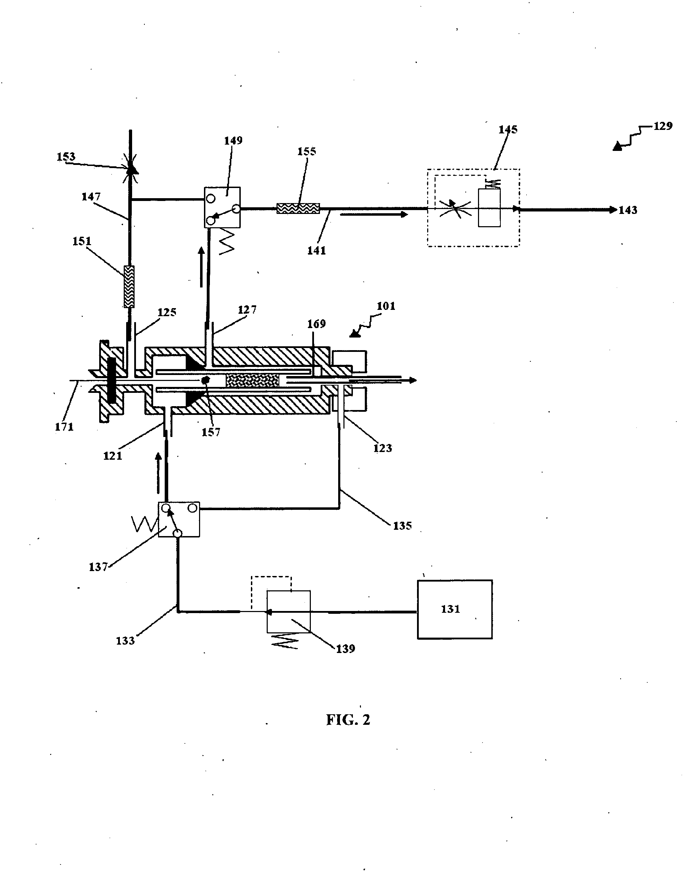

The sample inlet 105 and the first sample outlet 109 are defined in opposite sides of the body 103 of the injector 101. The sample inlet 105 is provided with a septum 111 through which a needle 171 (shown in Figure 2) may be inserted, which is intended to feed the sample at a predetermined initial injection point (indicated by 157 in the same Figure 2), preferably included in the section 113.

The injector 101 further comprises a first fluid inlet 121 for feeding a carrier fluid into the injector 101 so as to carry the sample from the initial injection point 157, through the whole injection chamber 107, to the first sample outlet 109. The injector 101 further comprises a second fluid inlet 123 for feeding a cleaning fluid into the injector 101 so as to clean the injection chamber 107. The injector 101 further comprises a fluid outlet 125 for discharging the cleaning fluid from the injector 101.

In Figure 1, the second fluid inlet 123 is arranged at an opposite side of the injector 101 with respect to the first fluid inlet 121, and the fluid outlet 125 is arranged at an opposite side of the injector 101 with respect to the first sample outlet 109 in such a manner that the flow of the cleaning fluid is opposite with respect to the flow of the carrier fluid in the injector 101.

The injector 101 further comprises a second sample outlet 127 for discharging from the injector 101 a sample portion which is not intended for analysis, whereby only a sample portion which is intended for analysis is directed to the first sample outlet 109.

The injector 101 further comprises a heater (not shown) for heating the injector 101. Various heating elements and configurations can be used that are well known in the art. Thanks to this provision, the liquid sample is vaporized in whole or partially in section 113 and maintained in the gas phase along the entire body 103 of the injector 101. The desired temperature may vary depending on whether the sample is gas or liquid and its composition. Liquid samples require a temperature ranging from about 200 degrees Celsius to about 400 degrees Celsius for achieving vaporization with more preferable temperatures in the range of about 200 degrees Celsius to about 400 degrees Celsius. For gas samples lower temperatures are used ranging from as low ambient temperature to about 200 degrees Celsius, more typically between from about 50 to about 150 degrees Celsius.

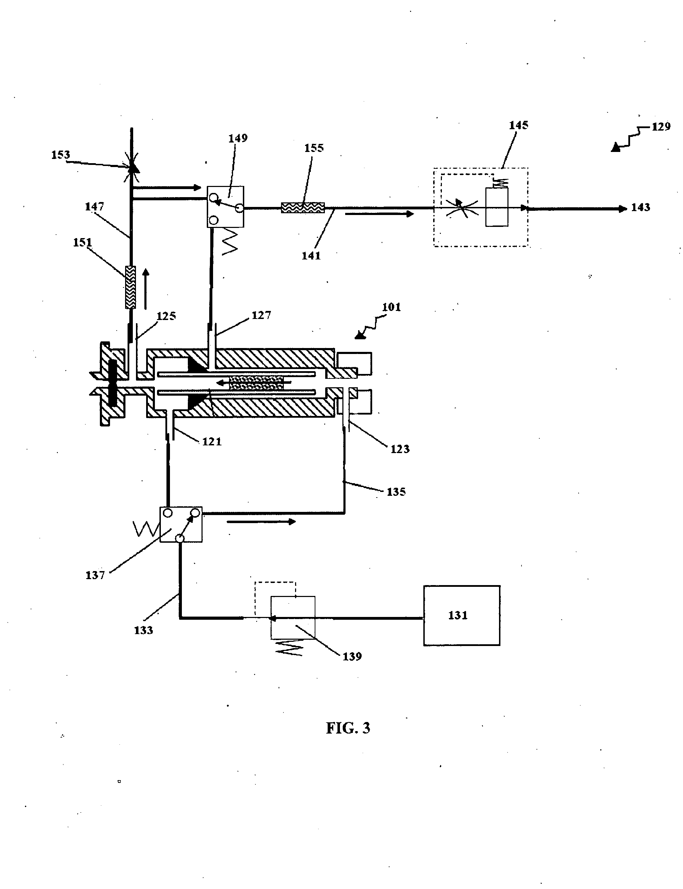

Figures 2 and 3 show an injection system 129 for injecting the sample into a chromatography column (not shown) comprising the injector 101 and one fluid supply 131 in fluid communication with the first fluid inlet 121 through a supply line 133. In Figure 2, injection system 129 further comprises a connector 169 intended to connect the injector 101 to the chromatography column and which is removably housed in the first sample outlet 109. In Figure 2, the connector 169 is partially housed in the injection chamber 107 for a predetermined length thereof.

The injection system 129 further comprises a cleaning fluid supply line 135 connected to the second fluid inlet 123 and in fluid communication with the supply line 133. The injection system 129 further comprises a valve 137, for example a solenoid valve, arranged in the supply line 133, for switching between the first fluid inlet 121 and the second fluid inlet 123. Upstream from the valve 137, the supply line 133 is provided with a controller 139 of the carrier fluid pressure.

The injection system 129 further comprises a split line 141 connected to the second sample outlet 127 and provided with a vent exit 143. Furthermore, the split line 127 is provided with a flow rate control device 145 intended to control the flow rate of the sample discharged through the second sample outlet 127, for example a relief valve.

The injection system 129 further comprises a cleaning fluid outlet line 147 connected to the fluid outlet 125 and in fluid communication with split line 141. The injection system 129 further comprises a valve 149, for example a solenoid valve, arranged in the split line 141, for switching between the second sample outlet 127 and the fluid outlet 125. Furthermore, the cleaning fluid outlet line 147 is provided with a trap 151 and a pressure drop device 153. Moreover, the split line 141 is provided with a trap 155 upstream from the flow rate control device 145. The traps 151, 155 are intended to collect any condensable components of the sample in the cleaning fluid outlet line 147 and in the split line 141 respectively. The pressure drop device 153 may be a needle valve or any other suitable device or could be avoided altogether depending on the overall design.

In Figure 4, a chromatography system 159 for analyzing the sample comprising the injection system 129 is shown.

The chromatography system 159 comprises a chromatography column 161 in fluid communication with the injection system 129, and a detector 163 connected to the chromatography column 161 for detecting the components of said sample. The chromatography system 159 further comprises a waste line 165 connected to the detector 163 through which the analyzed sample is discharged. The chromatography system 159 further comprises a computer with a screen 167 intended to show the resulting chromatogram.

In the following, a method for injecting the sample into the chromatography column 161 is described. The method comprises feeding the sample into the injector 101 by feeding the sample in the initial injection point 157 by means of the needle 171, separating predetermined components of the sample in the packing 119 of the injector 101, and injecting the predetermined components so separated into the chromatography column 161. The sample is carried from the initial injection point 157 along the injector 101 to the chromatography column 161 by a carrier fluid, for example helium, which is stored in the fluid supply 131 and fed to the injector 101 through the first fluid inlet 121 via the supply line 133.

Injecting the predetermined components of the sample into the chromatography column 161 is preferably performed at a substantially constant flow rate of the predetermined components thanks to the controller 139 of the carrier fluid pressure.

The sample flow eluted from the packing 119 housed in the injection chamber 107 of the injector 101 is split into a first portion, intended for analysis, which is therefore injected into the chromatography column 161 through the first sample outlet 109 and the connector 169, and a second portion, which is not intended for analysis, which is then fed into the channel 173 and discharged from the injector 101 at a controlled flow rate through the second sample outlet 127 and via the split line 141.

The fluid stored in the fluid supply 131 is also used as a cleaning fluid to remove the components of the sample remaining in the injector 101 from the injector 101. The cleaning fluid is fed to the injector 101 through the second fluid inlet 123 via the cleaning fluid supply line 135.

The injection system 129 according to the present disclosure may be used in a foreflush mode shown in Figure 3 and in a backflush mode shown in Figure 4. The flows of the sample and the fluids are indicated by the arrows on the Figures.

In the foreflush mode (Figure 3), the sample to be analyzed is fed into the section 113 of the injection chamber 107; for example by passing the needle 171 through the septum 111 and feeding the sample in the initial injection point 157. The sample is then vaporized in the section 113 of the injection chamber 107 while the valve 137 is actuated in order to connect the first fluid inlet 121 to the fluid supply 131 and while the valve 149 is actuated in order to connect the second sample outlet 127 to the vent exit 143. The slight surge in pressure due to the vaporization of the light components of the sample in the section 113 is vented through the second sample outlet 127.

The vaporized sample is carried by the carrier fluid through the packing 119. The components of the sample elute from the packing 119 and may then be split. The first portion of the components so separated, intended for analysis, is injected into the chromatography column 161 through the connector 169, at a substantially constant flow rate of the components thanks to the controller 139 of the carrier fluid pressure. The second portion of the components so separated, which is not intended for analysis, is discharged from the injector 101 through the second sample outlet 127, through the trap 155 to the vent exit 143. The split ratio during the injection step is maintained at a predetermined value through the flow rate control device 145.

After a predetermined time, the injection system 129 is placed in the backflush mode (Figure 4). The valve 137 is actuated in order to connect the second fluid inlet 123 to the fluid supply 131 and the valve 149 is actuated in order to connect the fluid outlet 125 to the vent exit 143. This results in backwashing the remaining components of the sample from the packing 119 and discharging the same from the injector 101 through the fluid outlet 125, through the trap 151 to the vent exit 143.

Thanks to the pressure drop 153, a substantially constant flow rate of the discharged cleaning fluid is maintained during the backflush period.

Advantages of the present disclosure may further include one or more of the following. The injection system of the present disclosure enables to control the flow rates, pressures and temperatures for avoiding a obtaining the desired sample composition at the inlet of the chromatography column. The carrier fluid flow rate is controlled, thereby inducing a controlled pressure at the column head, which ensures a constant flow rate in the chromatography column. In the same time, the split outlet flow rate is controlled using a flow controller ensuring a constant split ratio. The combination of these two controls allows avoiding the component discrimination based on the components boiling point. Further, the introduction of a packing in the injection chamber allows for, amongst others, a gain of space, an ease of maintenance, reducing dead volume, eliminating need for connections.

Although various specific embodiments have been described above for purposes of illustration, the invention is not limited to the specific embodiments disclosed herein. Various modifications to the disclosed embodiments would be possible by persons skilled in this art without departing from the scope of the invention. Accordingly, the invention is defined herein only by the scope of the appended claims.

## Claims

1. An injector (101) for injecting a sample into a chromatography column (161), comprising:
a sample inlet (105) for feeding the sample into the injector (101);
an injection chamber (107); and
a first sample outlet (109) intended to be in fluid communication with the chromatography column (161);
wherein the injector (101) further comprises a packing (119) housed in the injection chamber (107) for separating the sample into components thereof.

2. The injector (101) of claim 1, further comprising:
a first fluid inlet (121) for feeding a carrier fluid into the injector (101) so as to carry the sample through the injection chamber (107) to the first sample outlet (109).

3. The injector (101) of claim 2, further comprising:
a second fluid inlet (123) for feeding a cleaning fluid into the injector (101) so as to clean the injection chamber (107);
a fluid outlet (125) for discharging the cleaning fluid from the injector (101).

4. The injector (101) of claim 3, further comprising:
a second sample outlet (127) for discharging a predetermined amount of the sample from the injector (101).

5. The injector (101) of claim 4, further comprising a heater for heating a section (113) of the injection chamber (107) upstream of the packing (119).

6. An injection system (129) for injecting a sample into a chromatography column (161), comprising:
the injector (101) according to any one of claims 2-5; and
at least one fluid supply (131) in fluid communication with the first fluid inlet (121).

7. The injection system (129) of claim 6, further comprising a means (139) to control the carrier fluid pressure.

8. The injection system (129) of claim 6 or claim 7 when depending on claim 4 or claim 5, further comprising a means (145) to control the flow rate of the sample discharged through the second sample outlet (127).

9. A chromatography system (159) for analyzing a sample comprising:
the injection system (129) according to any one of claims 6-8;
at least one chromatography column (161) in fluid communication with the injector (101); and
a detector (163) connected to the chromatography column (161) for detecting the components of said sample.

10. A method for injecting a sample into a chromatography column (161) comprising:
feeding the sample into an injector (101) comprising an injection chamber (107);
separating predetermined components of the sample in the injection chamber (107); and
injecting the predetermined components so separated into the chromatography column (161).

11. The method of claim 10, further comprising:
feeding a carrier fluid into the injector (101) so as to carry the sample through the injection chamber (107).

12. The method of claim 11, further comprising:
interrupting feeding the carrier fluid;
feeding a cleaning fluid into the injector (101) so as to clean the injection chamber (107); and
discharging the cleaning fluid from the injector (101).

13. The method of any one of claims 10-12, wherein injecting the predetermined components into the chromatography column (161) is performed at a predetermined flow rate.

14. The method of any one of claims 10-13, further comprising:
splitting the predetermined components so separated into a first portion intended to be injected into the chromatography column (161), and a second portion intended to be discharged from the injector (101).

15. The method of claim 14, further comprising:
maintaining a predetermined ratio between the flow rate of the first portion and the flow rate of the second portion.
